# EUROPÄISCHE PATENTSCHRIFT

(11) **EP 3 219 055 B1**
(45) Veröffentlichungstag und Bekanntmachung des Hinweises auf die Patenterteilung: **07.11.2018**
(21) Anmeldenummer: 15804077.4
(22) Anmeldetag: 10.11.2015
(51) Int. Cl.: H04L 12/40, H04L 12/403, H04L 12/42, H05B 37/02, H05B 33/08, B60Q 3/80, B60Q 3/70

(54) **KOMMUNIKATIONSSYSTEM ZUR ANSTEUERUNG MEHRERER TEILNEHMERN IN EINEM KRAFTFAHRZEUG, VERWENDUNG DES KOMMUNIKATIONSSYSTEMS, SOWIE ENTSPRECHENDER DATENBUS**
COMMUNICATION SYSTEM FOR ACTUATION OF MULTIPLE SUBSCRIBERS IN A MOTOR VEHICLE, APPLICATION OF THE COMMUNICATION SYSTEM, AND CORRESPONDING DATA BUS
SYSTÈME DE COMMUNICATION POUR LA COMMANDE DE PLUSIEURS PARTICIPANTS DANS UN VÉHICULE AUTOMOBILE, APPLICATION DU SYSTÈME DE COMMUNICATION, AINSI QUE BUS DE DONNÉES CORRESPONDANT

(30) Priorität: 12.11.2014 DE 102014223122
(43) Veröffentlichungstag der Anmeldung: 20.09.2017
(73) Patentinhaber: LEONI Bordnetz-Systeme GmbH, 97318 Kitzingen (DE)
(72) Erfinder: SEIDEL, Toralf, 97232 Giebelstadt (DE)
(74) Vertreter: FDST Patentanwälte
(86) Internationale Anmeldenummer: PCT/EP2015/076234
(87) Internationale Veröffentlichungsnummer: WO 2016/075152

(56) Entgegenhaltungen:
- US-A1- 2011 035 404
- US-A1- 2012 299 480

## Beschreibung

Die Erfindung betrifft ein Kommunikationssystem zur Ansteuerung von mehreren Teilnehmern in einem Kraftfahrzeug, umfassend einen Kontroller sowie eine Anzahl von Teilnehmern. Die Erfindung betrifft weiterhin eine Verwendung dieses Kommunikationssystem in einem Kraftfahrzeug und einen Datenbus für ein derartiges Kommunikationssystem.

Bei modernen Kraftfahrzeugen werden zunehmend mehr Ambiente-Beleuchtungselemente, insbesondere auf LED-Basis, eingesetzt. Diese Ambiente-Beleuchtungselemente werden situationsabhängig von einem zentralen Steuergerät angesteuert. Die Beleuchtungselemente sind dabei innerhalb des Kraftfahrzeugs verteilt angeordnet. Dabei werden eine Vielzahl von einzelnen LED-Modulen angesteuert, wobei jedes LED-Modul üblicherweise eine Steuereinheit in Form eines Treibers oder eines ICs aufweist sowie mehrere Leuchtdioden unterschiedlicher Farben. Jedes Einzelne dieser LED-Module muss dabei angesteuert und mit Energie versorgt werden.

Aus der US 2012/0299480 A1 ist ein Versorgungs- und Steuersystem zur Versorgung und (An-)Steuerung von LED-Einheiten zu entnehmen. Die LED-Einheiten sind seriell hintereinander geschaltet und weisen jeweils eine LED-Kontrolleinheit und mehrere LEDs auf. Die LEDs sind unabhängig voneinander mittels der LED-Kontrolleinheit ansteuerbar. Die LED-Einheiten sind mittels einer Versorgungs- und Steuerleitung miteinander zum Empfangen eines von einer LED-Treibereinheit bereitgestellten Versorgungs- und Steuersignals verbunden.

Die US 2011/0035404 A1 beschreibt ein Verfahren sowie eine Vorrichtung zum vereinfachten Erstellen und Konfigurieren von Lichteffekten und "Licht-Shows".

Gleichzeitig ist eine Kontrolle und Überwachung der Funktionsfähigkeit der Ambiente-Beleuchtung gewünscht. Für die Ansteuerung der einzelnen LED-Module sowie deren Überwachung ist daher ein effektives Kommunikationssystem zur Kommunikation zwischen Zentralsteuergerät und den einzelnen LED-Modulen erforderlich. Gleichzeitig besteht insbesondere bei Kraftfahrzeugen das Bestreben nach möglichst kostengünstigen und gleichzeitig zuverlässigen Steuer- und Kommunikationssystemen.

Für die Datenkommunikation innerhalb des Kraftfahrzeugs sind bereits unterschiedliche Bussysteme, wie beispielsweise der sogenannte LIN-Bus oder auch der CAN-Bus bekannt. Beim CAN-Bus erfolgt die Datenübertragung über 2 Datenleitungen (2-Draht-Bus). Zusätzlich muss jedem Bus-Teilnehmer eine Bus-Adresse zugewiesen werden. Die Verwendung eines CAN-Busses für die Ansteuerung einer Vielzahl von LED-Modulen wäre daher vergleichsweise aufwändig.

Beim LIN-Bus besteht grundsätzlich die Möglichkeit einer sogenannten Auto-Adressierung, wodurch die Möglichkeit geschaffen wird, die einzelnen Teilnehmer ohne vorhergehende Adressierung zu verbauen. Der LIN-Bus wird häufig für eine kostengünstige Kommunikation von Sensoren und Aktoren mit integrierter Intelligenz im Kraftfahrzeug eingesetzt. Es handelt sich hierbei um einen Eindraht-Bus, so dass der LIN-Bus kostengünstig umgesetzt werden kann. Allerdings ist der LIN-Bus-Standard auf maximal 64 Adressen in einem LIN-Bus-Netzwerk beschränkt, empfohlen werden lediglich 16 Teilnehmer. Bei einer Ambiente-Beleuchtung mit einer Vielzahl von LED-Modulen ist dies häufig nicht ausreichend.

Vor diesem Hintergrund liegt der Erfindung die Aufgabe zugrunde, ein einfaches und kostengünstiges Kommunikationssystem für eine Vielzahl von Teilnehmern insbesondere in einem Kraftfahrzeug bereitzustellen.

Die Aufgabe wird gemäß der Erfindung gelöst durch ein Kommunikationssystem zur Ansteuerung von mehreren Teilnehmern in einem Kraftfahrzeug mit den Merkmalen des Anspruches 1, durch eine Verwendung dieses Kommunikationssystems gemäß dem Anspruch 14, und durch einen Datenbus gemäß dem Anspruch 15. Die abhängigen Ansprüche zeigen entsprechende Ausführungsbeispiele.

Das Kommunikationssystem umfasst dabei einen Kontroller, welcher beispielsweise in einem zentralen Steuergerät integriert ist sowie eine Vielzahl von Teilnehmern. Die Teilnehmer sind dabei hardwaretechnisch seriell nacheinander über eine Datenleitung zu einer Teilnehmerkette verbunden. Sie sind daher linienartig angeordnet, weisen also eine Linien-Topologie auf. Bei den Teilnehmern handelt es sich insofern um intelligente Teilnehmer, als dass diese jeweils eine Steuereinheit aufweisen. Bei dieser Steuereinheit handelt es sich insbesondere um ein IC-Bauteil (Integrated Circuit). Zur Kommunikation mit und Ansteuerung der Teilnehmer wird ein Datenbus mit einem Kommunikationsprotokoll verwendet, welches eine lineare Aneinanderreihung von Datenpaketen aufweist. Für jeden Teilnehmer ist dabei ein teilnehmerspezifisches Datenpaket im Kommunikationsprotokoll enthalten. Bei einem jeweiligen Datenpaket handelt es sich um eine Aneinanderreihung von einzelnen Bits, also von logischen Einsen oder Nullen. Ein jeweiliges Datenpaket ist dabei unterteilt in einen Teilnehmerteil und einen Informationsteil, welcher dem Teilnehmerteil insbesondere nach Art eines Headers vorgelagert ist. Der Informationsteil enthält eine Information über den Status des nachfolgenden Teilnehmerteils des Datenpakets. Im Informationsteil ist der Status hinterlegt, ob dieses Datenpaket und damit der Teilnehmerteil bereits von einem Teilnehmer empfangen oder nicht empfangen wurde. Im Teilnehmerteil sind zunächst Ansteuerinformationen enthalten, die für einen Teilnehmer zu dessen Ansteuerung bestimmt sind.

Im Informationsteil ist zunächst der Status "nicht empfangen" enthalten. Von besonderer Bedeutung ist nunmehr, dass jeder Teilnehmer in der Lage ist, diesen Informationsteil zu überschreiben und den Status in den Status "empfangen" zu ändern. Sobald ein jeweiliger Teilnehmer das Kommunikationsprotokoll mit der Vielzahl von Datenpaketen erhält, überprüft der jeweilige Teilnehmer sukzessive die Informationsteile der Datenpakete. Diejenigen Datenpakete, bei denen der Status im Informationsteil auf "empfangen" ist, werden von dem jeweiligen Teilnehmer ignoriert. Sobald dieser Teilnehmer auf ein Datenpaket mit dem Status "nicht empfangen" stößt, identifiziert dieser Teilnehmer dieses Datenpaket als das für ihn gültige teilnehmerspezifische Datenpaket und verwendet die in dem Teilnehmerteil enthaltenen Informationen. Anschließend ändert dieser Teilnehmer den Status im Informationsteil auf "empfangen" und leitet schließlich das Kommunikationsprotokoll innerhalb der Teilnehmer-Kette an den nächsten Teilnehmer weiter.

Durch diese Ausgestaltung des Kommunikationssystems mit dem speziellen Kommunikationsprotokoll wird zunächst der besondere Vorteil erzielt, dass eine Adressierung innerhalb des Kommunikationsprotokolls zur Ansteuerung der einzelnen Teilnehmer nicht erforderlich und entsprechend auch nicht vorgesehen ist. Die Adressierung erfolgt implizit durch die lineare Topologie der Teilnehmer und dem korrespondierend hierzu linearen Aufbau des Kommunikationsprotokolls mit der Aneinanderreihung der einzelnen Datenpakete. Die Zuordnung der einzelnen Datenpakete des Kommunikationsprotokolls zu den einzelnen Teilnehmern erfolgt durch die Position des jeweiligen teilnehmerspezifischen Datenpakets innerhalb des Kommunikationsprotokolls. Dies bedeutet, dass die Reihenfolge der Datenpakete im Kommunikationsprotokoll für die einzelnen Teilnehmer der Reihenfolge der Teilnehmer innerhalb der Teilnehmerkette entspricht. Durch die in einem jeweiligen Datenpaket enthaltene Statusinformation und dem Überschreiben dieser Statusinformation durch die einzelnen Teilnehmer wird dadurch in effizienter Weise gewährleistet, dass jeder Teilnehmer genau das für ihn relevante Datenpaket verwendet und auswertet. Insgesamt wird hierdurch ein sehr einfacher Aufbau des Datenbusses ermöglicht. Die Zuordnung der Datenpakete für die einzelnen Teilnehmer erfolgt daher ähnlich wie bei einem Schieberegister: Der erste Registerplatz ist für den ersten Teilnehmer vorgesehen und wird durch das Überschreiben der Statusinformation quasi verbraucht, so dass der nächste Registerplatz aktiv ist. Im Vergleich zu Bussystemen mit Adressierung ist daher der Aufwand für die Zuordnung wesentlich geringer. Die Teilnehmer sind daher auch vergleichsweise einfach aufgebaut und weisen insbesondere keinen Prozessor auf. Bei der integrierten Steuereinheit handelt es sich bevorzugt lediglich um einen einfachen IC-Baustein, der für das Beschreiben des teilnehmerspezifischen Datenpakets zuständig ist.

Gleichzeitig wird durch die Beschreibbarkeit des jeweiligen Datenpakets die Möglichkeit der Hinterlegung von teilnehmerspezifischen Informationen ermöglicht, so dass grundsätzlich nicht nur eine unidirektionale Kommunikation zwischen dem Kontroller und dem jeweiligen Teilnehmer, sondern auch eine bidirektionale Kommunikation mit einer Datenübermittlung von dem jeweiligen Teilnehmer an den Kontroller erfolgt. Insgesamt ist daher ein effizientes und kostengünstiges Kommunikationssystem ermöglicht.

Im Hinblick auf eine hardwaretechnische Ausgestaltung des Kommunikationssystems sind die einzelnen Teilnehmer zweckdienlicherweise lediglich über eine einzige Ader für die Datenübertragung und Datenkommunikation seriell miteinander verbunden. Es ist daher also grundsätzlich eine einadrige Datenleitung bereits ausreichend. Ergänzend zu dieser einadrigen Datenleitung werden die einzelnen Teilnehmer noch mit einer üblicherweise zweiadrigen Versorgungsleitung verbunden, über die eine Spannungsversorgung bereitgestellt wird. Aufgrund der Natur der einzelnen Teilnehmer handelt es sich hierbei insbesondere um eine Niedervolt-Versorgung und die Versorgungsspannung liegt beispielsweise bei lediglich 5 Volt.

Vorzugsweise sind die Teilnehmer dabei in einer einfachen Ringstruktur in die einadrige Datenleitung eingebunden, wobei ausschließlich der letzte Teilnehmer der Teilnehmerkette wieder mit dem Kontroller verbunden ist. Die Richtung der Datenübermittlung erfolgt daher ausschließlich in einer Richtung vom Kontroller über die Teilnehmer und vom letzten Teilnehmer wieder zurück zum Kontroller. Eine solche Ausgestaltung erlaubt eine besonders einfache Konfektion des Kommunikationssystems. Die einzelnen Teilnehmer brauchen lediglich mit einem Dateneingang und mit einem Datenausgang in die einadrige Datenleitung eingebunden zu werden. Zwei aufeinanderfolgende Teilnehmer sind daher jeweils über einen Leitungsabschnitt miteinander verbunden, der am Datenausgang des vorhergehenden Teilnehmers und am Dateneingang des nachfolgenden Teilnehmers angeschlossen ist. Die einadrige Datenleitung lässt sich insgesamt in einen ersten Zuleitungsbschnitt vom Kontroller bis zum letzten Teilnehmer und einen Rückleitungsabschnitt zwischen dem letzten Teilnehmer und dem Kontroller unterteilen. Der Zuleitungsabschnitt wiederum setzt sich aus den einzelnen Abschnitten zwischen den Teilnehmern zusammen. Er bildet insoweit einen Hinkanal für die Daten und der Rückleitungsabschnitt einen Rückkanal für die Daten. Weitere Datenleitungsabschnitte sind nicht vorgesehen. Im Falle einer bidirektionalen Kommunikation erfolgt daher die Übermittlung der Rückinformation von einem Teilnehmer an den Kontroller über den Rückleitungsabschnitt. Bei dem Rückleitungsabschnitt handelt es sich daher ebenfalls um eine einadrige Verbindung zwischen dem letzten Teilnehmer und dem Kontroller.

Die einzelnen Teilnehmer sind vorzugsweise innerhalb eines Kabelsatzes insbesondere eines Kraftfahrzeug-Bordnetzes angeordnet. In besonders vorteilhafter Ausgestaltung sind sie dabei Teil eines integrierten Kabelsatzes. Hierunter wird verstanden, dass die einzelnen Teilnehmer steckerfrei unmittelbar in den Kabelsatz integriert sind, d.h. die einzelnen Leitungen, also die insbesondere lediglich einadrige Datenleitung sowie die Versorgungsleitungen sind direkt durch geeignete Kontaktierungen an die einzelnen Adern des Kabelsatzes angeschlossen. Hierzu werden die einzelnen Teilnehmer beispielsweise durch Crimpen, Löten usw. an die Leitungen angeschlossen. Bei dem integrierten Kabelsatz handelt es sich daher um einen steckerfreien, vorgefertigten Kabelsatz mit der Vielzahl der Teilnehmer. Ergänzend ist auch der Kontroller Teil des Kabelsatzes, so dass der Kabelsatz insgesamt auch als intelligenter Kabelsatz bezeichnet werden kann. Alternativ wird der Kabelsatz an ein Steuergerät beispielsweise über einen Stecker angeschlossen. Innerhalb des Steuergeräts ist dann der Kontroller für die Ansteuerung der einzelnen Teilnehmer enthalten.

In bevorzugter Ausgestaltung übermittelt zumindest eine Anzahl der Teilnehmer teilnehmerspezifische Informationen an den Kontroller. Bei diesen teilnehmerspezifischen Informationen handelt es sich insbesondere um Eigendiagnose-Werte. Ein jeweiliger Teilnehmer ist daher insbesondere zur Eigendiagnose in der Lage, also zur Überprüfung der eigenen korrekten Funktionsfähigkeit, sowie zur Abgabe eines Fehlersignals, sofern bei der Eigendiagnose ein Fehler erkannt wird. Insbesondere handelt es sich bei dem Teilnehmer um ein LED-Modul. Im Rahmen der Eigendiagnose wird beispielsweise überprüft, ob alle einzelnen LEDs noch funktionsfähig sind.

Alternativ handelt es sich bei einem jeweiligen Teilnehmer um einen Sensor, welcher zur Messung beispielsweise von Umgebungsparameter ausgebildet ist. Dieser übermittelt dann seine Messinformationen an den Kontroller. Dies sind beispielsweise Messwerte für Temperatur, Druck etc. Schließlich kann es sich bei dem Teilnehmer auch um einen Aktor handeln, über den beispielsweise ein Schalter oder ein Ventil betätigt wird oder auch eine Komponente bewegt wird.

Zweckdienlicherweise erfolgt die Datenübermittlung an den Kontroller hierbei dadurch, dass ein jeweiliger Teilnehmer den Teilnehmerteil überschreibt. D.h. die im Teilnehmerteil enthaltenen Ansteuerinformationen für den jeweiligen Teilnehmer werden gelöscht und durch die teilnehmerspezifischen Informationen ersetzt. Durch diese Maßnahme wird daher innerhalb des Kommunikationsprotokolls kein zusätzlicher Platz benötigt. Die Gesamtanzahl der einzelnen Informationseinheiten (Bits) innerhalb des Kommunikationsprotokolls bleibt insbesondere gleich. Vorzugsweise überschreibt jeder Teilnehmer den Teilnehmerteil mit zumindest einer Statusinformation zur Eigendiagnose.

In bevorzugter Weiterbildung umfasst jedes der Datenpakete zusätzlich eine Prüfsumme, anhand dessen die Integrität der im Datenpaket enthaltenen Daten überprüfbar ist. Die Überprüfung erfolgt dabei zweckdienlicherweise durch den Kontroller, so dass dieser die Möglichkeit hat, die vom Teilnehmer übermittelten Daten im Hinblick auf deren Integrität zu überprüfen. Anhand der Prüfsumme ist daher zumindest eine Plausibilitätskontrolle gewährleistet.

Der Kontroller und die einzelnen Teilnehmer sind für die bidirektionale Kommunikation wie bereits erwähnt zweckdienlicherweise in einer Ringstruktur angeordnet. Sie sind daher linear aneinander gereiht, wobei der Kontroller das Kommunikationsprotokoll mit den einzelnen Datenpaketen zunächst an den ersten Teilnehmer abgibt, das Kommunikationsprotokoll mit den Datenpaketen dann sukzessive von den einzelnen Teilnehmern weitergegeben wird, bis es schließlich vom letzten Teilnehmer wieder an den Kontroller zurückgegeben wird. Der Kontroller und die Teilnehmer sind daher über die Datenleitung ringartig miteinander verbunden.

Zweckdienlicherweise überprüft der Kontroller am Ende der Teilnehmerkette, ob die Teilnehmerkette ordnungsgemäß ist. Hierzu analysiert er vorzugsweise das erhaltene Kommunikationsprotokoll. Dabei stehen verschiedene Analyseoptionen offen: Zum einen wertet der Kontroller hierzu die einzelnen überschriebenen teilnehmerspezifischen Informationen im Teilnehmerteil, insbesondere die teilnehmerspezifischen Statusinformationen aus. Eine Überprüfung ist weiterhin auch anhand der im Informationsteil enthaltenen Statusinformationen ermöglicht. So erkennt der Kontroller beispielsweise eine Inkonsistenz für den Fall, dass Datenpakete mit dem Status "nicht empfangen" zurückkommen. Dies deutet darauf hin, dass nicht alle Teilnehmer funktionsfähig sind.

Insbesondere um dies zu ermöglichen, ist vorzugsweise die Anzahl der teilnehmerspezifischen Datenpakete innerhalb des Kommunikationsprotokolls an die Anzahl der in der Teilnehmer-Kette enthaltenen Teilnehmer angepasst, d.h. die Anzahl der teilnehmerspezifischen Datenpakete entspricht der Anzahl der Teilnehmer innerhalb der Teilnehmer-Kette. Durch diese Maßnahme wird daher quasi durch den Kontroller bzw. das Kommunikationsprotokoll die Anzahl der Teilnehmer festgelegt und damit auch der letzte Teilnehmer bestimmt. Innerhalb des Teilnehmers brauchen daher keine Informationen über dessen Position hinterlegt zu sein. Dies ergibt sich ausschließlich durch seine Position innerhalb der Teilnehmerkette.

Alternativ oder ergänzend umfasst das Kommunikationsprotokoll weiterhin ein Kontroll-Datenpaket, welches insbesondere am Ende des Kommunikationsprotokolls an die teilnehmerspezifischen Datenpakete angehängt ist. Sofern das Kontroll-Datenpaket beispielsweise das erste Datenpaket mit dem Status "nicht empfangen" ist, erkennt der Kontroller, dass eine ordnungsgemäße Funktion der Teilnehmer-Kette vorliegt.

Wie bereits erwähnt, handelt es sich bei den einzelnen Teilnehmern vorzugsweise um LED-Module mit jeweils einer Steuereinheit und einer Mehrzahl von einzelnen LEDs. Insbesondere enthält jedes LED-Modul eine rote, blaue und grüne und vorzugsweise ergänzend auch noch eine weiße LED, so dass alle Farben von jedem LED-Modul bereitgestellt werden können.

Alternativ handelt es sich bei den Teilnehmern, wie bereits ebenfalls erwähnt, in zweckdienlicher Ausgestaltung um Sensoren oder auch um Aktoren. Innerhalb der Teilnehmer-Kette können dabei auch verschiedene Typen von Teilnehmern, also beispielsweise Sensoren und Aktoren oder auch LED-Module und Sensoren/Aktoren angeordnet sein. In bevorzugter Ausgestaltung handelt es sich bei den Teilnehmern jedoch ausschließlich um LED-Module, welche insbesondere für eine Ambiente-Beleuchtung eingesetzt werden.

Um auch bei einer Vielzahl von Teilnehmern eine möglichst hohe Datenrate zu gewährleisten sind die einzelnen Datenpakete möglichst kompakt gehalten. So ist der Teilnehmerteil eines jeden Datenpakets vorzugsweise auf maximal 64 Bit und insbesondere auf 32 oder 24 Bit begrenzt. Bei LED-Modulen werden dabei für jede einzelne LED 8 Bit bereitgehalten. Bei einem Vier-Farben- LED-Modul werden daher 32 Bit und bei einer RGB-Ausgestaltung mit nur drei LEDs werden 24 Bit reserviert. Für den Informationsteil des Datenpakets wird ebenfalls eine möglichst kompakte Bit-Folge verwendet. Diese beträgt vorzugsweise maximal 16 Bit und insbesondere maximal 8 oder 4 Bit. Im einfachsten Fall wird die im Informationsteil enthaltene Statusinformation durch eine logische Null für "nicht empfangen" oder durch eine logische Eins für "empfangen" kodiert. Ergänzend wird für die bereits erwähnte Kontrollsumme eines jeweiligen Datenpakets zweckdienlicherweise ebenfalls nur eine maximal 8-Bit große Bit-Folge und vorzugsweise lediglich eine 4-Bit-Folge verwendet.

Ein derartiges Kommunikationssystem ist im Betrieb in einem Kraftfahrzeug eingesetzt und dort verbaut. Alternativ hierzu wird das hier beschriebene Kommunikationssystem auch für andere Anwendungen eingesetzt und ist nicht auf die Verwendung bei einem Kraftfahrzeug beschränkt.

Die Aufgabe wird weiterhin erfindungsgemäß gelöst durch einen Datenbus für das zuvor beschriebene Kommunikationssystem mit den Merkmalen des Anspruches 15. Die im Hinblick auf das Kommunikationssystem angeführten Merkmale und bevorzugten Ausgestaltungen sind sinngemäß auch auf den Datenbus zu übertragen.

Ein Ausführungsbeispiel der Erfindung wird nachfolgend anhand der Figuren näher erläutert. Diese zeigen jeweils in vereinfachten Darstellungen:
- Fig. 1: eine stark vereinfachte schematische Darstellung eines Kommunikationssystems mit einem Kontroller und einer Vielzahl von Teilnehmern,
- Fig. 2: eine schematische ausschnittsweise Darstellung des Kontrollers mit zwei Teilnehmern,
- Fig. 3: eine vereinfachte Darstellung des Kommunikationsprotokolls und der sukzessiven Abarbeitung des Kommunikationsprotokolls innerhalb der Teilnehmer-Kette des Kommunikationssystems sowie
- Fig. 4: eine Bit-Folge eines jeweiligen teilnehmerspezifischen Datenpakets innerhalb des Kommunikationsprotokolls.

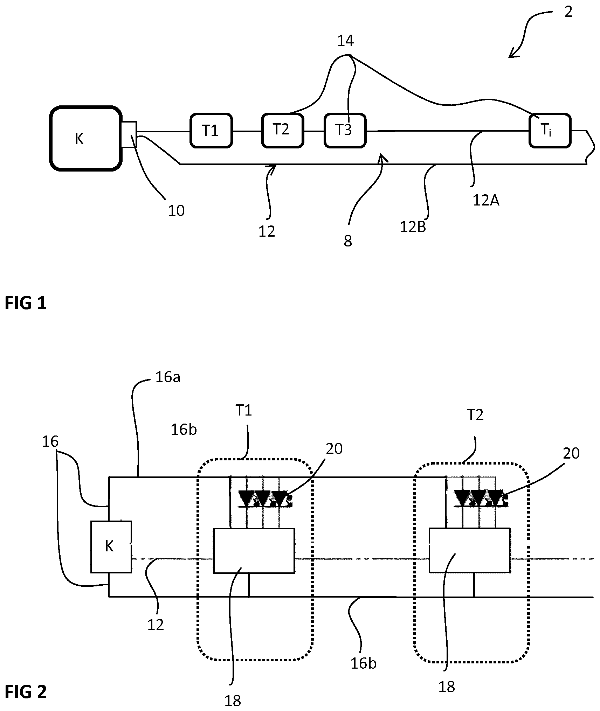

Das in der Fig. 1 dargestellte Kommunikationssystem2 umfasst einen Kontroller K sowie eine Vielzahl von einzelnen Teilnehmern Tᵢ, wobei i ein Laufindex mit i = 1 bis n ist und n die Gesamtanzahl der Teilnehmer Tᵢ ist. Die einzelnen Teilnehmer Tᵢ sind dabei Teil eines integrierten Kabelsatzes 8, welcher im Ausführungsbeispiel über eine Steckverbindung 10 mit dem Kontroller K verbunden ist. Im Ausführungsbeispiel der Fig. 1 ist dabei eine direkte Steckverbindung 10 mit dem Kontroller K angedeutet. Alternativ hierzu besteht auch die Möglichkeit, dass der Kontroller K entfernt von dem integrierten Kabelsatz 8 angeordnet ist und über eine weitere Kabelverbindung mit diesem integrierten Kabelsatz verbunden ist. Der Kontroller K ist beispielsweise in einem zentralen, hier nicht näher dargestellten Steuergerät angeordnet. Das Kommunikationssystem 2 ist insbesondere innerhalb eines Kraftfahrzeugs angeordnet. Bei den Teilnehmern Tᵢ handelt es sich insbesondere um LED-Module und das gesamte Kommunikationssystem 2 dient zur Ambiente-Beleuchtung innerhalb eines Kraftfahrzeug-Innenraums.

Die einzelnen Teilnehmer Tᵢ sind linear nacheinander folgend angereiht und über eine insbesondere einadrige Datenleitung 12 miteinander verbunden, so dass eine Teilnehmer-Kette 14 ausgebildet ist, die auch als "Daisy Chain" bezeichnet ist. Die Datenleitung 12 beginnt und endet am Kontroller K, so dass eine Ringstruktur ausgebildet ist. Sie untergliedert sich in einen einadrigen Zuleitungsabschnitt 12A vom Kontroller K bis zum letzten Teilnehmer Tᵢ und einen einadrigen Rückleitungsabschnitt 12B vom letzten Teilnehmer Tᵢ direkt zum Kontroller K.

Neben der Datenleitung 12 weist der integrierte Kabelsatz 8 weiterhin noch vorzugsweise eine zweiadrige Versorgungsleitung 16 auf, wie sie beispielhaft in der Fig. 2 dargestellt ist (nicht in Fig. 1 enthalten).

Die eine Ader 16a der Versorgungsleitung 16 stellt dabei ein Spannungspotential beispielsweise von 5 Volt zur Verfügung. Die zweite Ader 16b liegt beispielsweise auf Massepotential. In Fig. 2 ist weiterhin die Datenleitung 12 dargestellt, über die die einzelnen Teilnehmer Tᵢ seriell miteinander verbunden sind. Ein jeweiliger Teilnehmer Tᵢ weist eine integrierte Steuereinheit 18 sowie mehrere LEDs 20 auf. Im Ausführungsbeispiel sind drei LEDs 20 für die Farben rot, grün, blau dargestellt. Vorzugsweise ist weiterhin noch eine weiße LED als vierte LED vorgesehen. Die Steuereinheit 18 sowie die einzelnen LEDs 20 sind zweckdienlicherweise auf einer gemeinsamen Platine des jeweiligen als LED-Modul bezeichneten Teilnehmers Tᵢ angeordnet.

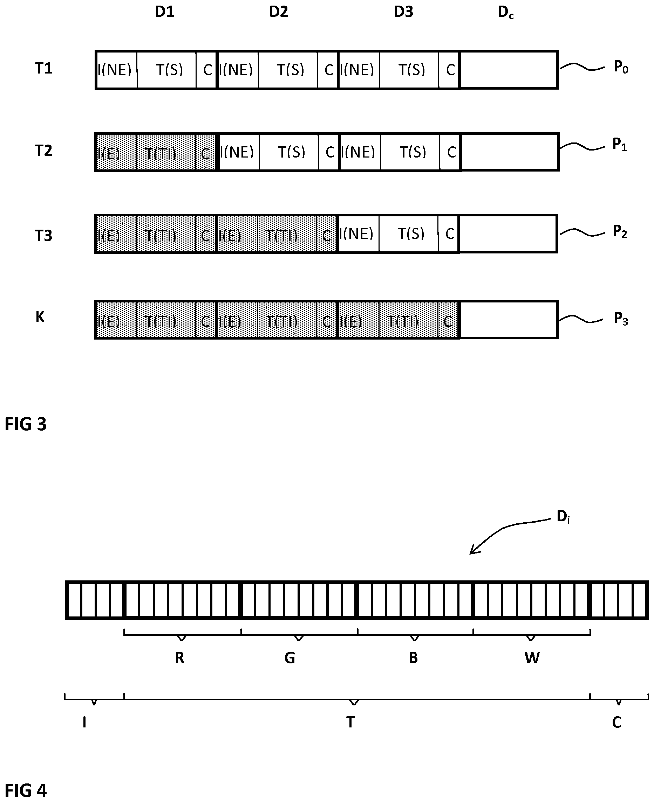

Der Kontroller K kommuniziert mit und steuert die einzelnen Teilnehmer Tᵢ mit Hilfe eines Datenbusses an, welcher ein Kommunikationsprotokoll P verwendet, wie es anhand der Fig. 3 näher erläutert wird. Anhand der Fig.3 wird auch die serielle Kommunikation zwischen Kontroller K und einzelnen Teilnehmern Tᵢ innerhalb der Ringstruktur erläutert. Beispielhaft wird dies anhand von drei Teilnehmern Tᵢ, nämlich dem ersten Teilnehmer T1, dem zweiten Teilnehmer T2 und dem dritten Teilnehmer T3 sowie dem Kontroller K illustriert. Da das Kommunikationsprotokoll P bei jedem Teilnehmer Tᵢ modifiziert wird, werden die verschiedenen Kommunikationsprotokolle Pᵢ ebenfalls mit einem Laufindex versehen. Das ursprüngliche vom Kontroller ausgegebene Kommunikationsprotokoll weist den Laufindex 0 auf.

Das Kommunikationsprotokoll Pᵢ setzt sich aus mehreren teilnehmerspezifischen Datenpaketen Dᵢ zusammen, wobei der Index i ein Laufindex für den jeweiligen Teilnehmer Tᵢ darstellt. Im Ausführungsbeispiel ist beispielhaft ein Kommunikationsprotokoll für 3 Teilnehmer Tᵢ dargestellt. Ergänzend weist im Ausführungsbeispiel das Kommunikationsprotokoll K am Ende der einzelnen teilnehmerspezifischen Datenpakete Dᵢ noch ein Kontrolldatenpaket D_{c} auf.

Ein jeweiliges teilnehmerspezifisches Datenpaket Dᵢ ist durch eine Bit-Folge, also eine lineare Abfolge von logischen Einsen und Nullen gebildet, wobei die Bit-Folge unterteilt ist in zumindest zwei Teile, nämlich einen Informationsteil I sowie einen Teilnehmerteil T. Im Ausführungsbeispiel ist am Ende des jeweiligen teilnehmerspezifischen Datenpakets Dᵢ noch eine Bit-Folge für eine Kontrollsumme C enthalten.

Innerhalb des Informationsteils I ist eine Information über den Status des Teilnehmerteils T enthalten. Und zwar wird im Ausführungsbeispiel hier unterschieden zwischen dem Status "nicht empfangen" und dem Status "empfangen". Dies ist in der Fig. 3 durch die Bezeichnung I(NE) für den Status "nicht empfangen" und durch I(E) für den Status "empfangen" charakterisiert.

Entsprechend weist der Teilnehmerteil T Steuerinformationen zum Ansteuern für einen jeweiligen Teilnehmer Tᵢ auf. Dies ist in der Fig. 3 durch T(S) bezeichnet. Ist der Teilnehmerteil T jedoch mit teilnehmerspezifischen Informationen überschrieben, so wird dies in der Fig. 3 durch T(TI) bezeichnet. Ergänzend sind die Datenpakete Dᵢ, welche mit teilnehmerspezifischen Informationen TI überschrieben sind, grau hinterlegt. Die Kommunikation innerhalb des Kommunikationssystems 2 ist wie folgt:

Der Kontroller K gibt das Kommunikationsprotokoll P₀ mit den teilnehmerspezifischen Datenpaketen Dᵢ an den ersten Teilnehmer T1 ab. Sämtliche teilnehmerspezifischen Datenpakete Dᵢ zeigen im Informationsteil I den Status "nicht empfangen" (T(NE)). Dadurch wird angegeben, dass das jeweilige Datenpaket Dᵢ noch nicht den zugeordneten Teilnehmer Tᵢ erreicht hat und von diesem empfangen wurde. Ergänzend sind im jeweiligen Teilnehmerteil T jeweils Ansteuerinformationen S enthalten. Der erste Teilnehmer T1 empfängt daher das ursprüngliche Kommunikationsprotokoll P₀, wie es in der ersten Zeile der Fig. 3 dargestellt ist.

Der Teilnehmer T1 verwendet das erste Datenpaket D1 und entnimmt die entsprechenden darin enthaltenen Steuerinformationen S. Anschließend überschreibt der erste Teilnehmer T1 die Statusinformation in "empfangen" und überschreibt zugleich vorzugsweise auch den Teilnehmerteil T mit teilnehmerspezifischen Informationen TI.

Das derart modifizierte Kommunikationsprotokoll wird als Kommunikationsprotokoll P₁ an den nächsten Teilnehmer T2 weitergeleitet. Dieser wertet - wie jeder andere Teilnehmer 6 auch - zunächst den Informationsteil I aus. Der jeweilige Teilnehmer Tᵢ ignoriert dabei das jeweilige Datenpaket Dᵢ so lange, bis er auf das erste Datenpaket Dᵢ trifft, bei dem im Informationsteil I der Status "nicht empfangen" enthalten ist. Dies nimmt der jeweilige Teilnehmer Tᵢ dann als das für ihn bestimmte Datenpaket Dᵢ und verwendet die darin enthaltenen Steuerinformationen S. Anschließend beschreibt der jeweilige Teilnehmer Tᵢ den Informationsteil des Datenpakets Dᵢ, ändert den Status in "empfangen" und beschreibt auch dessen Teilnehmerteil T. Dies erfolgt sukzessive, bis alle Datenpakete Dᵢ modifiziert und beschrieben sind. Jedes teilnehmerspezifische Datenpaket Dᵢ weist daher am Ende der Teilnehmer-Kette 14 im Informationsteil I den Status "empfangen" auf und enthält zusätzlich im Teilnehmerteil T teilnehmerspezifische Informationen TI. Dieses vom letzten Teilnehmer Tₙ modifiziertes Kommunikationsprotokoll P₃ wird dann schließlich an den Kontroller K zurück übermittelt. Dieser überprüft zum einen anhand der Kontrollsummen C der einzelnen Datenpakete Dᵢ die im jeweiligen Teilnehmerteil T enthaltenen Informationen auf Integrität. Schließlich überprüft der Kontroller K noch anhand des Kontroll-Datenpakets D_{c}, ob die Teilnehmer-Kette 14 ordnungsgemäß funktionsfähig ist.

In Fig. 4 ist schließlich noch beispielhaft eine Bit-Folge eines jeweiligen teilnehmerspezifischen Datenpakets Dᵢ dargestellt, insbesondere für den Anwendungsfall, bei dem es sich bei dem Teilnehmer Tᵢ um ein Vierfarben-LED-Modul handelt. Für jede der vier Farben rot, grün, blau sowie weiß ist jeweils eine 8-Bit-Datenfolge R,G,B,W reserviert. Diese 4 x 8 Bit-Datenfolge bildet dabei den Teilnehmerteil. Diesem vorangestellt ist der Informationsteil I, welcher im Ausführungsbeispiel durch eine 4-Bit-Datenfolge repräsentiert ist. Gefolgt ist der Teilnehmerteil T schließlich von der Kontrollsumme C, die durch eine 4-Bit-Datenfolge repräsentiert wird.

### Bezugszeichenliste

- 2: Kommunikationssystem
- 8: integrierter Kabelsatz
- 10: Steckverbindung
- 12: Datenleitung
- 12A: Zuleitungsabschnitt
- 12B: Rückleitungsabschnitt
- 14: Teilnehmerkette
- 16: Versorgungsleitung
- 16a,b: Ader
- 18: Steuereinheit
- 20: LED

- K: Kontroller
- Tᵢ: Teilnehmer

- Dᵢ: teilnehmerspezifisches Datenpaket
- I: Informationsteil
- T: Teilnehmerteil
S Steuerinformation
T_{I} teilnehmerspezifische Informationen
- C: Kontrollsumme

- D_{c}: Kontroll-Datenpaket

- P: Kommunikationsprotokoll

## Patentansprüche

1. Kommunikationssystem (2) zur Ansteuerung von mehreren Teilnehmern (Tᵢ) in einem Kraftfahrzeug, wobei das Kommunikationssystem (2) einen Kontroller (K) sowie eine Anzahl von Teilnehmer (Tᵢ) aufweist, wobei
- die Teilnehmer (Tᵢ) seriell nacheinander über eine Datenleitung (12) zu einer Teilnehmer-Kette (14) verbunden sind,
- jeder Teilnehmer (Tᵢ) eine Steuereinheit (18) aufweist,
- das Kommunikationssystem angepasst ist, um zur Ansteuerung der Teilnehmer (Tᵢ) ein Datenbus mit einem Kommunikationsprotokoll (P) zu verwenden,
- das Kommunikationsprotokoll (8) eine lineare Aneinanderreihung von Datenpaketen (Dᵢ, D_{c}) aufweist, wobei für jeden Teilnehmer (Tᵢ) ein teilnehmerspezifisches Datenpaket (Dᵢ) vorgesehen ist,
- ein jeweiliges teilnehmerspezifische Datenpaket (Dᵢ) in einen Teilnehmerteil (T) und einen Informationsteil (I) unterteilt ist, sowie
- der Informationsteil (I) eine von dem jeweiligen Teilnehmer (Tᵢ) beschreibbare Information enthält,
**dadurch gekennzeichnet, dass**
- die beschreibbare Information den Status des Teilnehmerteils enthält, wobei der Status den Wert "Empfangen" oder den Wert "Nicht Empfangen" aufweist,
- ein jeweiliger Teilnehmer (Tᵢ) dazu angepasst ist, das erste teilnehmerspezifische Datenpaket (Dᵢ) mit dem Status "Nicht Empfangen" als das für ihn gültige Datenpaket (Dᵢ) zu verwenden und den Status auf "Empfangen" zu ändern.

2. Kommunikationssystem (2) nach dem vorhergehenden Anspruch, dazu angepasst, dass die Datenleitung (12) eine einzige Ader für die Datenübertragung aufweist, über die die Teilnehmer (Tᵢ) seriell miteinander verbunden sind.

3. Kommunikationssystem (2) nach dem vorhergehenden Anspruch, dazu angepasst, dass die Teilnehmer (Tᵢ) in einer Ringstruktur seriell miteinander verbunden sind und ausschließlich der letzte Teilnehmer (Tᵢ) über einen Rückleitungsabschnitt (12B) der Datenleitung (12) mit dem Kontroller (K) verbunden ist.

4. Kommunikationssystem (2) nach einem der vorhergehenden Ansprüche, dazu angepasst, dass die einzelnen Teilnehmer (Tᵢ) Bestandteil eines integrierten Kabelsatzes (8) sind, bei dem die Teilnehmer (Tᵢ) unmittelbar an die Datenleitung (12) sowie eine Versorgungsleitung (16) steckerfrei angebunden sind.

5. Kommunikationssystem (2) nach einem der vorhergehenden Ansprüche, dazu angepasst, dass zumindest eine Anzahl der Teilnehmer (Tᵢ) den Teilnehmerteil (T) mit teilnehmerspezifischen Informationen (T_{I}), wie Messwerte oder Eigendiagnose-Werte überschreibt.

6. Kommunikationssystem (2) nach einem der vorhergehenden Ansprüche, dazu angepasst, dass jedes teilnehmerspezifische Datenpaket (Dᵢ) eine Prüfsumme aufweist, anhand dessen die Integrität der im teilnehmerspezifischen Datenpaket (Dᵢ) enthaltenen Daten überprüfbar ist.

7. Kommunikationssystem (2) nach einem der vorhergehenden Ansprüche, dazu angepasst, dass der Kontroller und die Teilnehmer (Tᵢ) eine Ringstruktur bilden und der Controller am Ende der Teilnehmer-Kette (14) überprüft, ob diese ordnungsgemäß ist.

8. Kommunikationssystem (2) nach einem der vorhergehenden Ansprüche, dazu angepasst, dass die Anzahl der teilnehmerspezifischen Datenpakete (Dᵢ) der Anzahl der Teilnehmer (Tᵢ) zuzüglich eines eventuellen Kontroll-Datenpakets (D_{c}) entspricht.

9. Kommunikationssystem (2) nach einem der vorhergehenden Ansprüche, dazu angepasst, dass am Ende des Kommunikationsprotokolls (P) ein Kontroll-Datenpaket (D_{c}) für den Kontroller enthalten ist, anhand dessen der Kontroller überprüft, ob die Teilnehmer-Kette (14) ordnungsgemäß ist.

10. Kommunikationssystem (2) nach einem der vorhergehenden Ansprüche, wobei es sich bei den Teilnehmern (Tᵢ) um LED-Module handelt.

11. Kommunikationssystem (2) nach einem der vorhergehenden Ansprüche, wobei es sich bei den Teilnehmern (Tᵢ) um Sensoren handelt.

12. Kommunikationssystem (2) nach einem der vorhergehenden Ansprüche, dazu angepasst, dass der Teilnehmerteil maximal 64 Bit und insbesondere 24 oder 32 Bit aufweist.

13. Kommunikationssystem (2) nach einem der vorhergehenden Ansprüche, dazu angepasst, dass der Informationsteil maximal 16 Bit und insbesondere maximal 8 oder 4 Bit enthält.

14. Verwendung des Kommunikationssystems (2) nach einem der vorhergehenden Ansprüche in einem Kraftfahrzeug, zur Ansteuerung von nichtsicherheitsrelevanten Teilnehmern (Tᵢ).

15. Datenbus für ein Kommunikationssystem (2) nach einem der vorhergehenden Ansprüche zur Ansteuerung von Teilnehmern (Tᵢ), wobei der Datenbus ein Kommunikationsprotokoll (P) umfasst, wobei
- das Kommunikationsprotokoll eine lineare Aneinanderreihung von Datenpaketen (Dᵢ, D_{c}) aufweist,
- für jeden Teilnehmer (Tᵢ) ein teilnehmerspezifisches Datenpaket (Dᵢ) im Datenkommunikationsprotokoll vorgesehen ist,
- ein jeweiliges teilnehmerspezifisches Datenpaket (Dᵢ) des Datenkommunikationsprotokolls in einen Teilnehmerteil und einen Informationsteil unterteilt ist,
- der Informationsteil eine von dem jeweiligen Teilnehmer (Tᵢ) beschreibbare Information über den Status des Teilnehmerteils enthält, wobei der Status den Wert "Empfangen" oder den Wert "Nicht Empfangen" aufweist.

## Claims

1. Communication system (2) for actuating multiple subscribers (Tᵢ) in a motor vehicle, wherein the communication system (2) has a controller (K) and a number of subscribers (Tᵢ), wherein
- the subscribers (Tᵢ) are connected in series one after the other by means of a data line (12) to form a subscriber chain (14),
- each subscriber (Tᵢ) has a control unit (18),
- the communication system is adapted to actuate the subscribers (Tᵢ) using a data bus having a communication protocol (P),
- the communication protocol (8) has a linear array of data packets (Dᵢ, D_{c}), wherein a subscriber-specific data packet (Dᵢ) is provided for each subscriber (Tᵢ),
- a respective subscriber-specific data packet (Dᵢ) is divided into a subscriber portion (T) and an information portion (I), and also
- the information portion (I) contains a piece of information that the respective subscriber (Tᵢ) can write to,
**characterized in that**
- the piece of information that can be written to contains the status of the subscriber portion, wherein the status has the value "Received" or the value "Not received",
- a respective subscriber (Tᵢ) is adapted to use the first subscriber-specific data packet (Dᵢ) with the status "Not received" as its applicable data packet (Dᵢ) and to change the status to "Received".

2. Communication system (2) according to the preceding claim, adapted such that the data line (12) has a single wire for the data transmission by means of which the subscribers (Tᵢ) are connected to one another in series.

3. Communication system (2) according to the preceding claim, adapted such that the subscribers (Tᵢ) are connected to one another in series in a ring structure and exclusively the last subscriber (Tᵢ) is connected to the controller (K) by means of a return line section (12B) of the data line (12).

4. Communication system (2) according to one of the preceding claims, adapted such that the individual subscribers (Tᵢ) are part of an integrated cable set (8) in which the subscribers (Tᵢ) are connected directly to the data line (12) and a supply line (16) in a plug-free fashion.

5. Communication system (2) according to one of the preceding claims, adapted such that at least a number of the subscribers (Tᵢ) overwrite the subscriber portion (T) with subscriber-specific information (T_{I}), such as measured values or self-diagnosis values.

6. Communication system (2) according to one of the preceding claims, adapted such that each subscriber-specific data packet (Dᵢ) has a checksum that can be used to check the integrity of the data contained in the subscriber-specific data packet (Dᵢ).

7. Communication system (2) according to one of the preceding claims, adapted such that the controller and the subscribers (Tᵢ) form a ring structure and the controller at the end of the subscriber chain (14) checks whether the latter is correct.

8. Communication system (2) according to one of the preceding claims, adapted such that the number of subscriber-specific data packets (Dᵢ) corresponds to the number of subscribers (Tᵢ) plus any control data packet (D_{c}).

9. Communication system (2) according to one of the preceding claims, adapted such that at the end of the communication protocol (P) there is a control data packet (D_{c}) contained for the controller that the controller uses to check whether the subscriber chain (14) is correct.

10. Communication system (2) according to one of the preceding claims, wherein the subscribers (Tᵢ) are LED modules.

11. Communication system (2) according to one of the preceding claims, wherein the subscribers (Tᵢ) are sensors.

12. Communication system (2) according to one of the preceding claims, adapted such that the subscriber portion has a maximum of 64 bits and particularly 24 or 32 bits.

13. Communication system (2) according to one of the preceding claims, adapted such that the information portion contains a maximum of 16 bits and particularly a maximum of 8 or 4 bits.

14. Use of the communication system (2) according to one of the preceding claims in a motor vehicle, for actuating non-safety-relevant subscribers (Tᵢ).

15. Data bus for a communication system (2) according to one of the preceding claims for actuating subscribers (Tᵢ), wherein the data bus comprises a communication protocol (P), wherein
- the communication protocol has a linear array of data packets (Dᵢ, D_{c}),
- a subscriber-specific data packet (Dᵢ) is provided in the data communication protocol for each subscriber (Tᵢ),
- a respective subscriber-specific data packet (Dᵢ) of the data communication protocol is divided into a subscriber portion and an information portion,
- the information portion contains a piece of information that the respective subscriber (Tᵢ) can write to about the status of the subscriber portion, wherein the status has the value "Received" or the value "Not received".

## Revendications

1. Système de communication (2) destiné à la commande de plusieurs participants (Tᵢ) dans un véhicule automobile, dans lequel le système de communication (2) comporte un contrôleur (K) ainsi qu'un nombre de participants (Tᵢ), dans lequel
- les participants (Tᵢ) sont reliés les uns aux autres en série par l'intermédiaire d'une ligne de données (12) en une chaîne de participants (14),
- chaque participant (Tᵢ) comporte une unité de commande (18),
- le système de communication est conçu pour utiliser un bus de données avec un protocole de communications (P) pour commander les participants (Tᵢ),
- le protocole de communication (8) comporte un séquençage linéaire de paquets de données (Dᵢ, D_{c}), dans lequel il est prévu pour chaque participant (Tᵢ) un paquet de données (Dᵢ) spécifique du participant,
- un paquet de données (Dᵢ) respectif spécifique du participant est divisé en une partie participant (T) et en une partie information (I), et
- la partie information (I) contient une information pouvant être décrite par le participant (Tᵢ) respectif, **caractérisé en ce que**
- l'information pouvant être décrite contient l'état du participant, dans lequel l'état présente la valeur "reçu" ou la valeur "non reçu",
- un participant (Tᵢ) respectif est conçu pour utiliser le premier paquet de données (Dᵢ) spécifique du participant présentant l'état "non reçu" en tant que paquet de données (Dᵢ) valide pour celui-ci et pour le faire passer l'état à "reçu".

2. Système de communication (2) selon la revendication précédente, conçu de manière à ce que la ligne de données (12) comporte un conducteur unique pour la transmission de données, par l'intermédiaire duquel les participants (Tᵢ) sont reliés en série les uns aux autres.

3. Système de communication (2) selon la revendication précédente, conçu de manière à ce que les participants (Tᵢ) soient reliés les uns aux autres dans une structure en anneau et à ce que le dernier participant (Tᵢ) exclusivement soit relié au contrôleur (K) par l'intermédiaire d'une section de ligne de retour (12B) de la ligne de données (12).

4. Système de communication (2) selon l'une des revendications précédentes, conçu de manière à ce que les participants (Tᵢ) individuels fassent partie d'un ensemble intégré de câbles (8), dans lequel les participants (Tᵢ) sont directement reliés sans connecteur à la ligne de données (12) et à une ligne d'alimentation (16).

5. Système de communication (2) selon l'une des revendications précédentes, conçu de manière à ce qu'au moins un nombre des participants (Tᵢ) remplace la partie participant (T) par des informations (Tᵢ) spécifiques des participants, telles que des valeurs de mesure ou des valeurs de diagnostic propres.

6. Système de communication (2) selon l'une des revendications précédentes, conçu de manière à ce que chaque paquet (Dᵢ) spécifique du participant comporte une somme de contrôle sur la base de laquelle l'intégrité des données contenues dans les paquets de données (Dᵢ) spécifiques des participants peut être vérifiée.

7. Système de communication (2) selon l'une des revendications précédentes, conçu de manière à ce que le contrôleur et les participants (Tᵢ) forment une structure en anneau et à ce que le contrôleur vérifie à l'extrémité de la chaîne de participants (14) si celle-ci est correcte.

8. Système de communication (2) selon l'une des revendications précédentes, conçu de manière à ce que le nombre des paquets de données (Dᵢ) spécifiques des participants corresponde au nombre des participants (Tᵢ) en plus d'un éventuel paquet de données de contrôle (D_{c}) .

9. Système de communication (2) selon l'une des revendications précédentes, conçu de manière à ce qu'un paquet de données de contrôle (D_{c}) soit contenu pour le contrôleur à la fin du protocole de communication (P), sur la base duquel le contrôleur vérifie si la chaîne de participants (14) est correcte.

10. Système de communication (2) selon l'une des revendications précédentes, dans lequel les participants (Tᵢ) sont des modules de LED.

11. Système de communication (2) selon l'une des revendications précédentes, dans lequel les participants (Tᵢ) sont des capteurs.

12. Système de communication (2) selon l'une des revendications précédentes, conçu de manière à ce que la partie participant comporte au maximum 64 bits et en particulier 24 ou 32 bits.

13. Système de communication (2) selon l'une des revendications précédentes, conçu de manière à ce que la partie information contienne au maximum 16 bits et en particulier 8 ou 4 bits.

14. Utilisation du système de communication (2) selon l'une des revendications précédentes dans un véhicule automobile, pour commander des participants (Tᵢ) sans rapport avec la sécurité.

15. Bus de données destiné à un système de communication (2) selon l'une des revendications précédentes pour commander des participants (Tᵢ), dans lequel le bus de données comprend un protocole de communication (P), dans lequel
- le protocole de communication comporte un séquençage linéaire de paquets de données (Dᵢ, D_{c}),
- pour chaque participant (Tᵢ), il est prévu dans le protocole de communication de données un paquet de données (Dᵢ) spécifique du participant,
- un paquet de données (Dᵢ) spécifique du participant respectif du protocole de communication de données est divisé en une partie participant et une partie information,
- la partie information contient une information pouvant être décrite par le participant (Tᵢ) respectif concernant l'état de la partie participant, dans lequel l'état présente la valeur "reçu" ou la valeur "non reçu".
